# EUROPEAN PATENT SPECIFICATION

(11) **EP 0 907 676 B1**
(45) Date of publication and mention of the grant of the patent: **16.05.2001**
(21) Application number: 97925239.2
(22) Date of filing: 24.06.1997
(51) Int. Cl.: C08K 5/13, C08K 5/15, C08K 5/49, C08L 23/04

(54) **STABILIZER COMPOSITIONS**
STABILISATORZUSAMMENSETZUNGEN
COMPOSITIONS STABILISATRICES

(30) Priority: 27.06.1996 GB 9613515
(43) Date of publication of application: 14.04.1999
(73) Proprietor: CLARIANT INTERNATIONAL LTD., 4132 Muttenz (CH); Clariant Finance (BVI) Limited, Road Town, Tortola (VG)
(72) Inventor: MALIK, Jan, F-68300 Saint Louis (FR); STOLL, Klaus, D-79589 Binzen (DE); THUERMER, Andreas, 68330 Huningue (FR)
(74) Representative: D'haemer, Jan Constant
(86) International application number: IB9700770
(87) International publication number: WO9749758

(56) References cited:
- EP-A- 0 124 664
- DE-A- 3 903 218
- PATENT ABSTRACTS OF JAPAN vol. 011, no. 398 (C-466), 25 December 1987 & JP 62 158737 A (CHISSO CORP), 14 July 1987,
- PATENT ABSTRACTS OF JAPAN vol. 012, no. 391 (C-537), 18 October 1988 & JP 63 137941 A (MITSUI TOATSU CHEM INC), 9 June 1988,

## Description

The invention relates to stabilizer compositions for stabilizing polyethylene-based thermoplastic polymers in processing.

During processing into articles, polymers are subjected to high temperatures and pressures which can have an adverse effect on the molecular weight and physical properties of the polymers and on the appearance of the finished articles made from these polymers. Therefore, there is a need for antioxidant and color stabilizing additives which minimize oxidation and discoloration.

United States Patent No. 4 806 580 discloses stabilizer mixtures for stabilizing plastics material, e.g. polypropylene, in processing, containing (a) a chroman derivative and (b) an organic phosphite or phosphonite in a weight ratio of a:b of 1:5 to 1:14.

European Patent Application 0 542 108 discloses a stabilizing mixture for plastics materials containing polyethylene, comprising (a) a tocopherol compound and (b) a phosphorus- or sulphur-containing secondary antioxidant in a weight ratio of a:b of 1:1.4 to 1:5. The corresponding disclosure exists in the article of S.F. Laermer and P.F. Zambetti published in the Journal of Plastic Film & Sheeting, volume 8, 1992, pages 228 to 248. This article further describes a mixture of α-tocopherol, "Irganox (trade mark) 1010" (a sterically hindered phenol), and "Irgafos 168" (a phosphite) in the weight ratio of 1:1:4 for the stabilization of polypropylene.

The article of S.S. Young, S.F. Laermer and P.F. Zambetti published in the Journal of Plastic Film & Sheeting, volume 11, 1995, pages 126 to 142, demonstrates that α-tocopherol formulations can replace phenol/phosphite combinations as the primary antioxidant system, or the α-tocopherol formulations can simply replace the phosphite portion to achieve better performance.

German Patent No. 26 60 746 discloses the use of symmetrical triarylphosphites in combination with sterically hindered phenolic antioxidants in the stabilization of polyolefins.

It is the object of the present invention to provide an improved stabilizer composition for the stabilization of polyethylene-based thermoplastic polymers, such that both processing stability and color of the final products are improved.

This object is achieved with the stabilizer composition as hereinunder described. It has surprisingly been found that relatively small additions of α-tocopherol to known additive systems for polyethylene-based polymers, composed of a phenolic antioxidant and a phosphorus based secondary antioxidant, results in an unexpected synergistic effect. This stabilizer composition according to the invention comprising at least one member of three known additive classes significantly outperforms the additive systems that are known in the art.

Accordingly, the present invention provides a stabilizer composition comprising
a) at least one sterically hindered phenol,
b) at least one phosphorus-containing secondary antioxidant, and
c) at least one tocophenol compound
   wherein the weight ratio of component (a) to component (b) is from 2:1 to 1:4 and the weight ratio of component (a) to component (c) is from 2:1 to 10:1,
for the stabilization of polyethylene-based thermoplastic polymers against degradation, crosslinking and/or discoloration due to the exposure to heat or light, especially in the presence of oxygen.

The preferred weight ratio of component (a) to component (b) is 1:1 and that of component (a) to component (c) is 5:1.

The term "tocopherol compound" refers to any compound having the basic tocopherol structure of the vitamin E group. The preferred tocopherol compound as component (a) in the stabilizer composition according to the present invention is α-tocopherol (5,7,8-trimethyl-tocol).

As used herein, the term "sterically hindered phenol" refers to those compounds that are preferably derived from 2,6-di-tert.-butyl-phenol,2-tert.-butyl-6-methylphenol,2-tert.-butyl-5-methylphenol or other hindered phenols. Preferred examples of such compounds are 2,2'-Bis[3,5-[3,5-bis(1,1-dimethylethyl)-4-hydroxyphenyl]-1-oxopropoxy]methyl-1,3-propanediyl-3,5-bis(1,1-dimethylethyl)-4-hydroxybenzenepropanoate; octadecyl-3,5-bis(1,1-dimethylethyl)-4-hydroxybenzene-propanoate; 1,3,5tris[[3,5-bis(1,1-dimethylethyl)-4-hydroxyphenyl]methyl]-1,3,5-triazine-2,4,6(1H,3H,5H)-trione; 4,4',4"-[2,4,6-trimethyl-1,3,5-benzenetriyl)tris-(methylene)]tris[2,6-bis(1,1-dimethylethyl)-phenol; Ethanediyl-3,5-bis(1,1-dimethylethyl)-4-hydroxy-thiodi-2,1-benzenepropanoate; 2:1 calcium salt of monoethyl-[[3,5-bis(1,1-dimethylethyl)-4-hydroxyphenyl]methyl]-phosphonic acid ester; 2-[3-[3,5-bis(1,1-dimethylethyl)-4-hydroxy-phenyl]-1-oxo-propyl]hydrazide-3,5-bis(1,1-dimethylethyl)-4-hydroxy-benzenepropanoic acid; 2,2'-oxamido-bis-[ethyl-3-(3,5-di-tert.butyl-4-hydroxyphenyl)propionate] or mixtures thereof.

As also used herein, the term "phosphorus-containing secondary antioxidant" refers to compounds being hydroperoxide decomposers, i.e. compounds having the ability to react with hydroperoxides to yield non-radical products, essentially decomposing hydroperoxides into stable by-products. Examples of such compounds are triesters of phosphorous acid (phosphites) and diesters of phosphorous acid (phosphonites). Preferred specific members of the phosphorus-containing secondary antioxidants are Triphenylphosphite, Trisisodecylphosphite; Tris(nonylphenyl)phosphite; Distearyl pentaerythritol diphosphite; 2,4,6-tri-tert.-butyl-phenyl-2-butyl-2-ethyl-1,3-propanediol phosphite; Bis(2,4-di-tert.-butylphenyl)-pentaerythrityl diphosphite; 2,2',2"-nitrilo triethyl-tris[3,3',5,5'-tetra-tert.-butyl-1,1'-biphenyl-2,2'-diyl]phosphite; Bis[2,4-di-tert.-butyl-6-methyl-phenyl]ethyl phosphite; 2,2'-Ethylidene-bis-(4,6-di-tert.-butylphenyl)fluorophosphite; Tris-(2,4-di-tert.-butylphenyl)phosphite; the 4,6-di-tert.-butyl-m-cresol condensation products with the Friedel-Crafts-reaction products of biphenyl and phosphorus trichloride; Tetrakis [2,4-di-tert.-butylphenyl]-4.4'-biphenylenediphosphonite; the condensation products of 2,4-di-tert.-butylphenol with the Friedel-Crafts-reaction product of biphenyl and PCl₃.

The term "polyethylene-based thermoplastic polymer" refers to all types of homo- and copolymers of ethylene, e.g. high density polyethylene, low density polyethylene, linear low density polyethylene, ultra low density polyethylene and ultra high molecular weight polyethylene or to blends of polyethylene and at least another polymer. Those skilled in the art will know how to make the different types of copolymers that can be formed with ethylene, including alternating, block and graft copolymers as well as how to make blends of polyethylene with other polymers.

If in the stabilizer composition according to the present invention more than one compound of component (a), (b) or (c) is present, the definition of the weight ratios always refers to the total amount of component (a), (b) or (c).

The phosphites and phosphonites as well as the sterically hindered phenols disclosed above can be synthesized by techniques well known in the art from known compounds. They are commercially available and their tradenames as well as their chemical structural formulae are summarized in table 1.

The stabilizer composition of the present invention may be produced by simple physical mixing of the compounds (a), (b) and (c) in the desired weight ratio according to known methods. A preferred method is the dry blending of the components resulting in a free-flowing mixture which may be further subjected to a pre-extrusion step in order to achieve homogeneity and easy-to-handle pellets. The process for producing the stabilizer composition is a further aspect of the present invention.

A masterbatch composition comprising a stabilizer composition according to the invention and a thermoplastic material which is identical to or compatible with the thermoplastic polymer to be stabilized is similarly an object of the invention. Masterbatch compositions according to the invention comprise 10 to 80% by weight, preferably 5 to 25% by weight of the stabilizer composition and 90% to 20% by weight, preferably 95 to 75% by weight of the afore-mentioned thermoplastic material.

The invention also provides a method for enhancing the processing stability of polyethylene-based thermoplastic polymers comprising - incorporating therein at any convenient state of the processing - a stabilizing quantity of the stabilizer composition. This can be carried out according to known methods and may involve the incorporation of the stabilizer composition as such or in the form of the above-mentioned masterbatch. Also, the individual components can be incorporated separately in the correct ratio.

The concentration of the stabilizer mixture amounts from 0.001 to 5%, preferably from 0.01 to 1%, more preferably from 0.1 to 0.5% by weight, based on the weight of the polyethylene-based thermoplastic polymers to be stabilized.

The present invention further embraces a stabilized polyethylene-based thermoplastic polymer and any article manufactured therefrom that has been stabilized by the incorporation therein a stabilizing quantity of the stabilizer composition according to the present invention.

Further additives which may be added, if appropriate, include plasticicers, lubricants, emulsifiers, pigments, dyestuffs, nucleating agents, optical brighteners, flameproofing agents, antistatic agents, blowing agents, U.V. absorbers, U.V. quenchers, hindered amine light stabilizers, metal deactivators and several others commonly used.

As mentioned above the tradenames, the chemical structural formulae and the chemical names of the components (a) and (b) are listed in table 1.

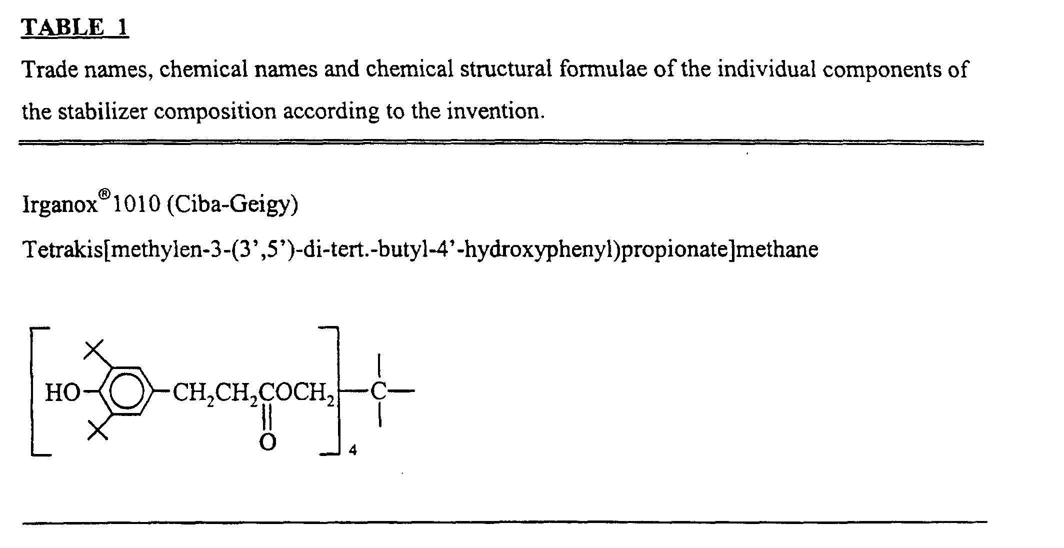

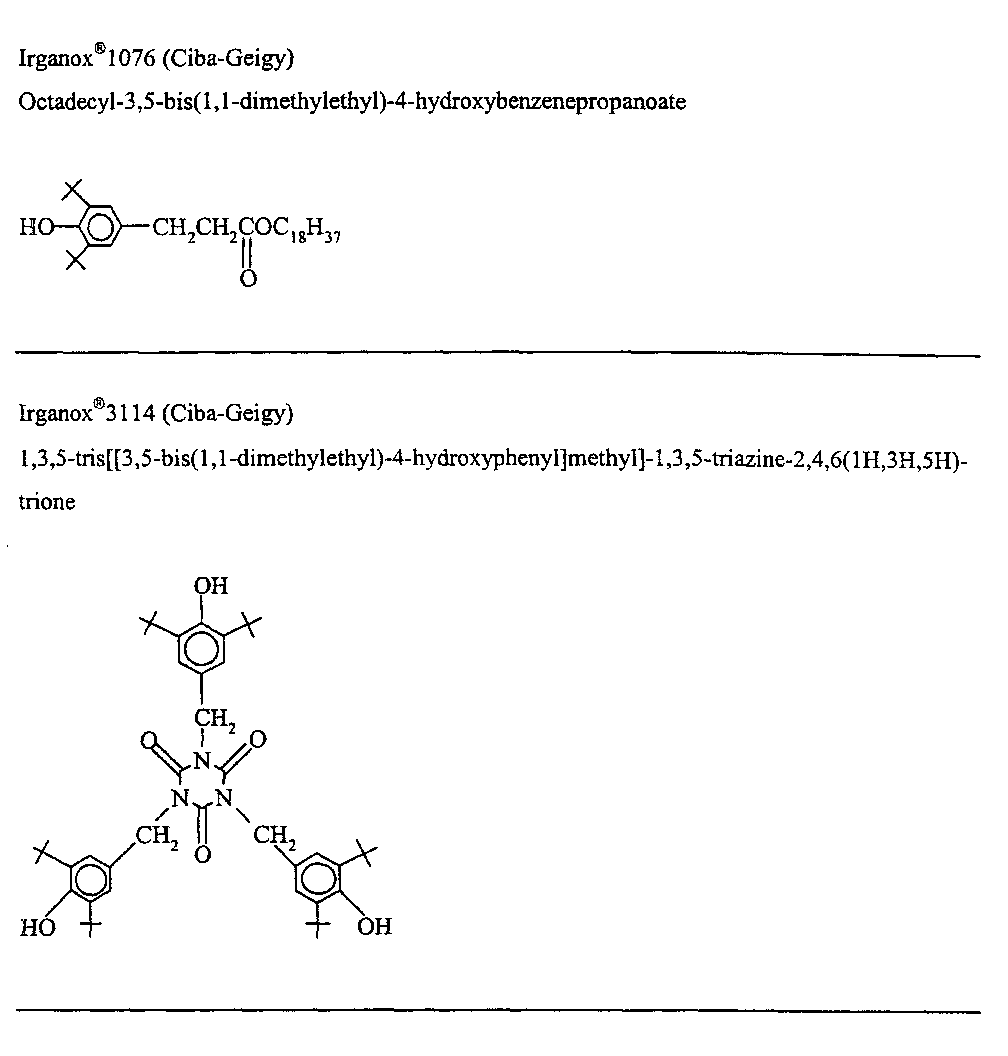

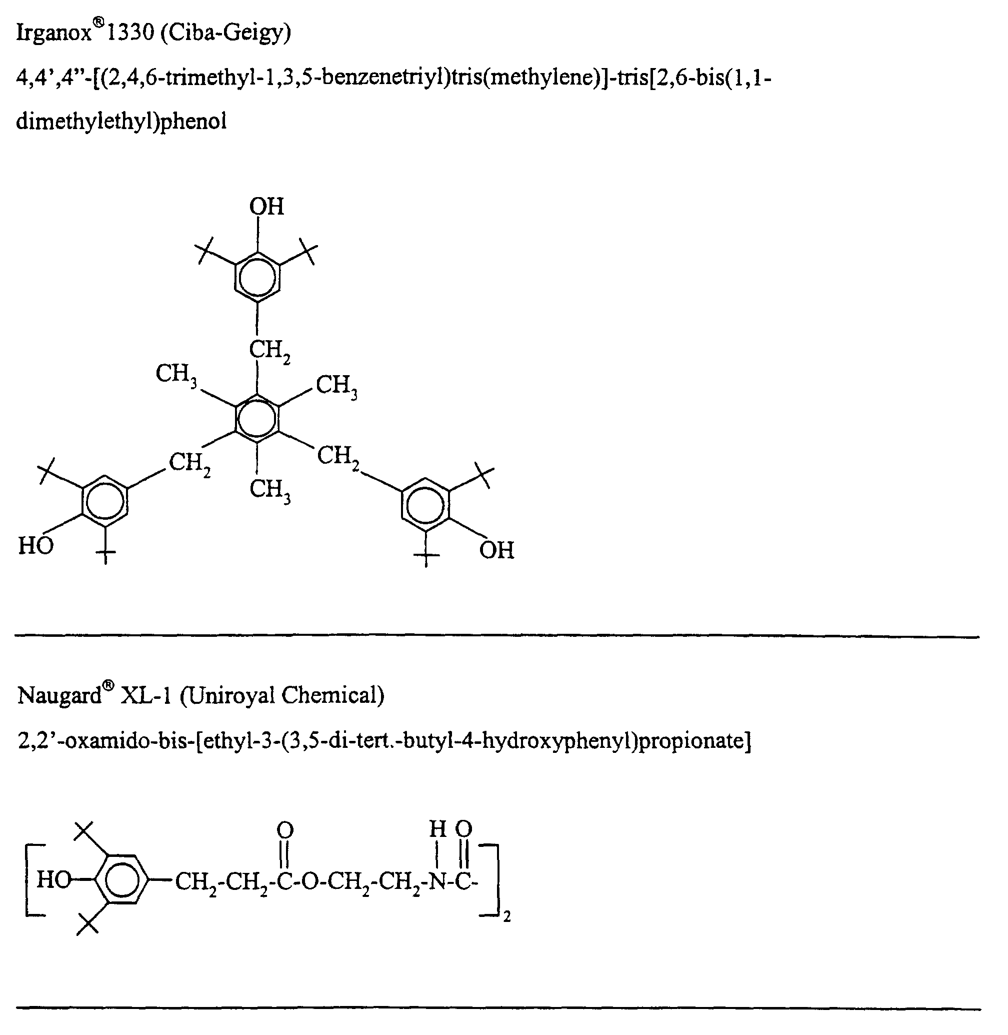

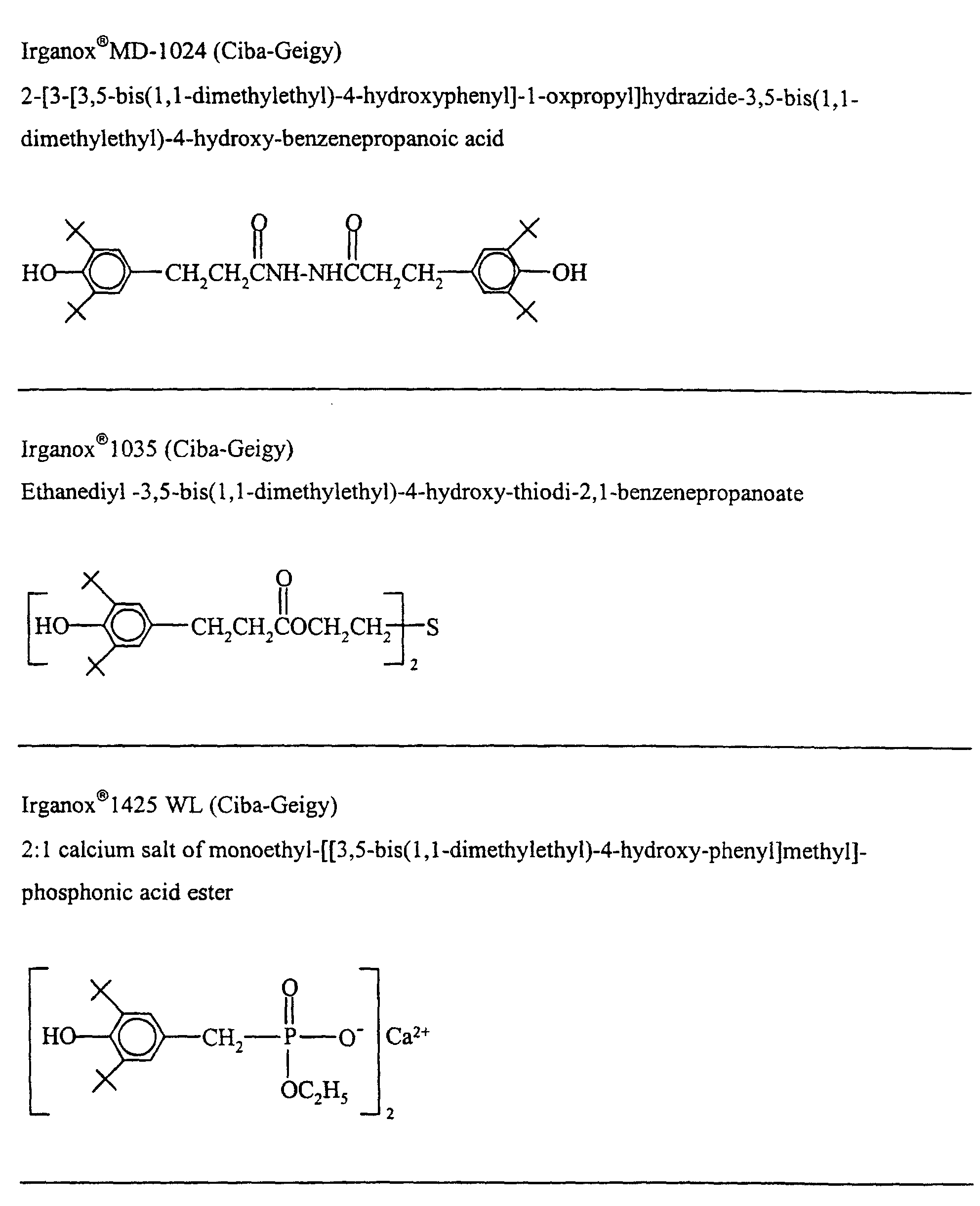

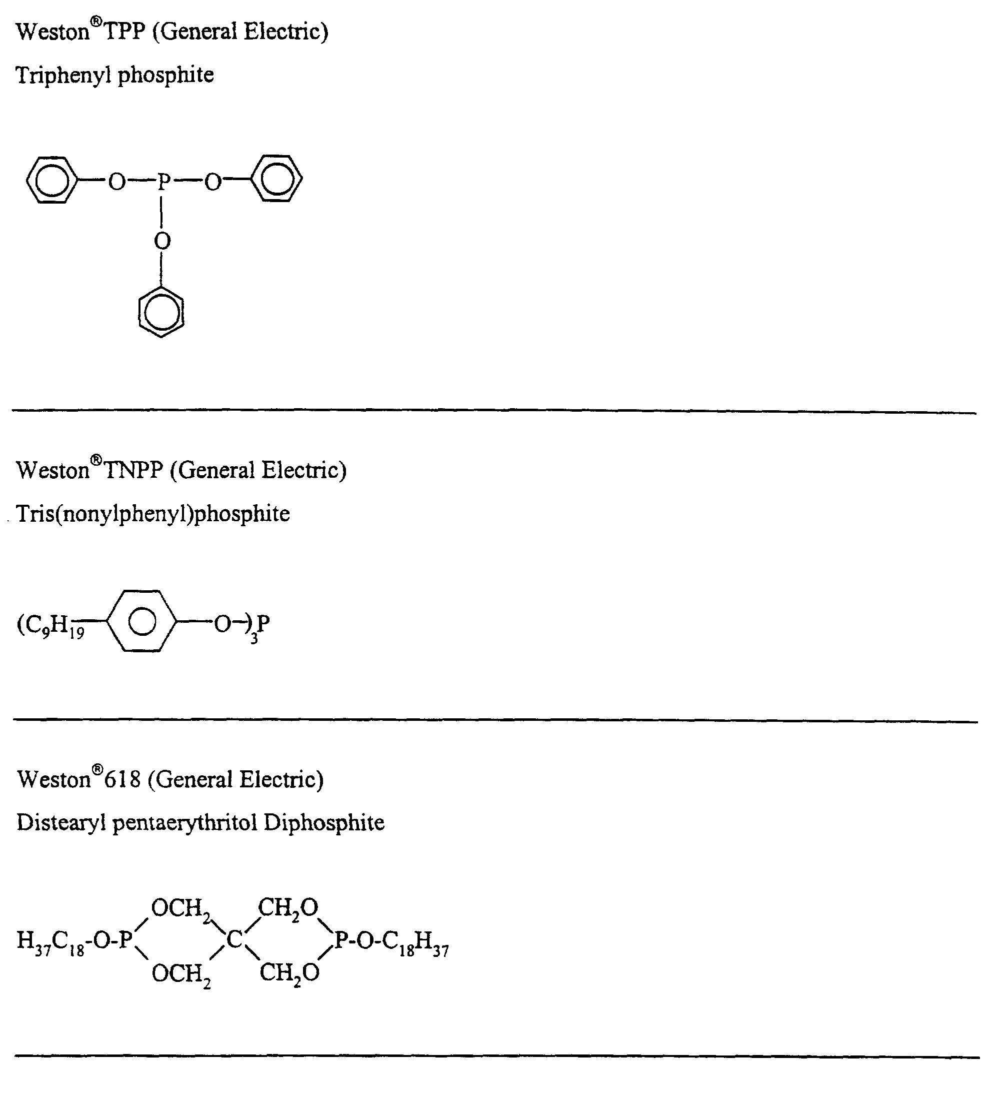

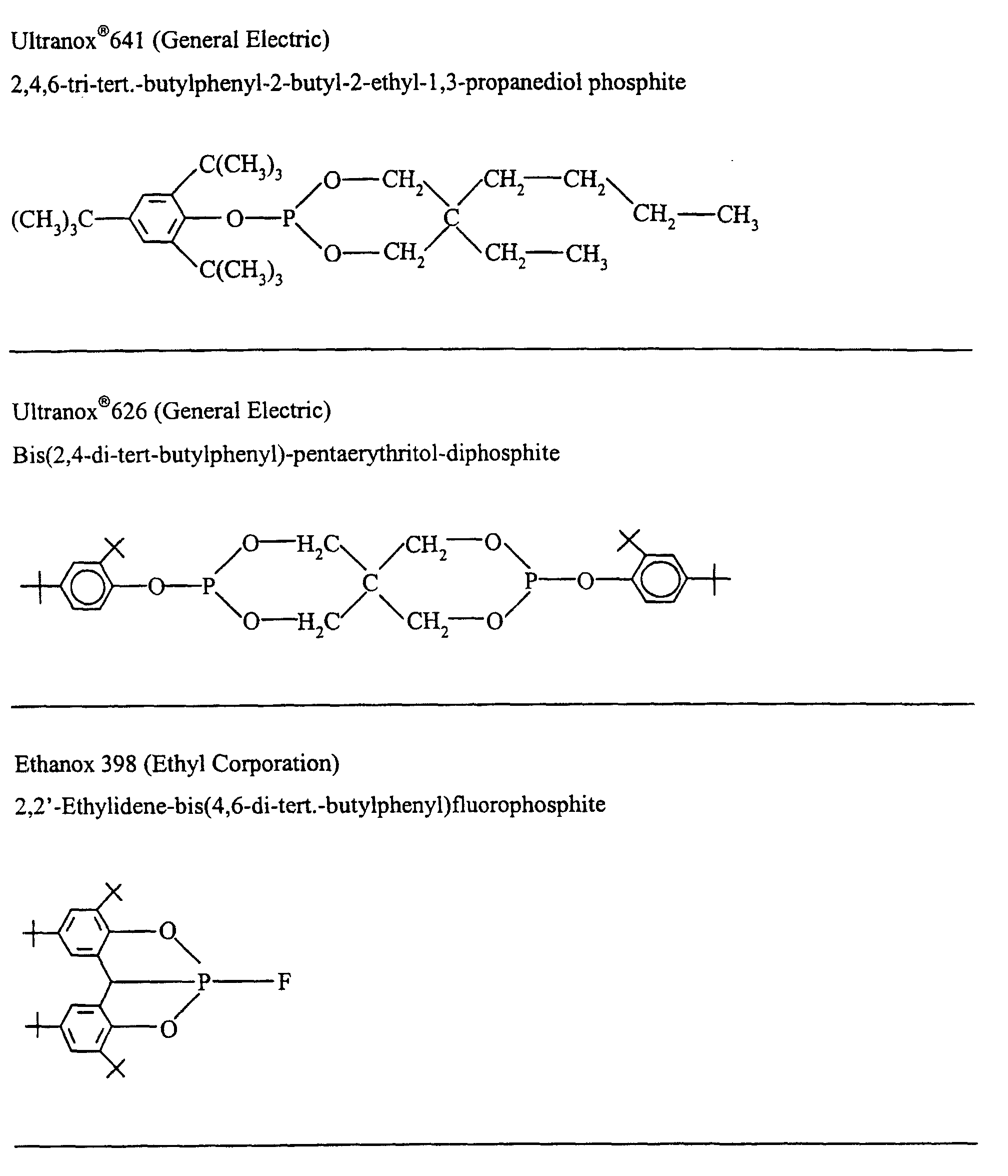

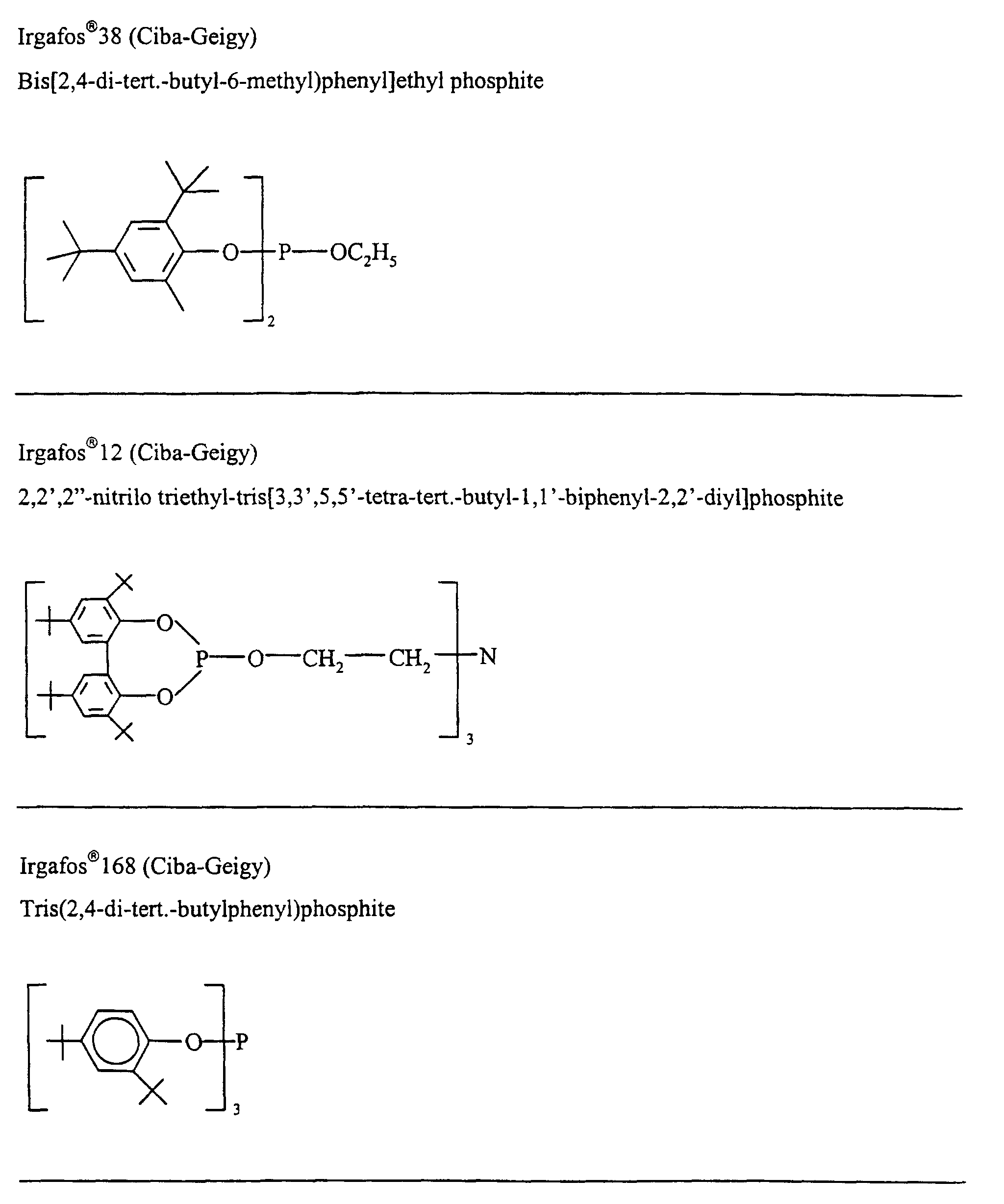

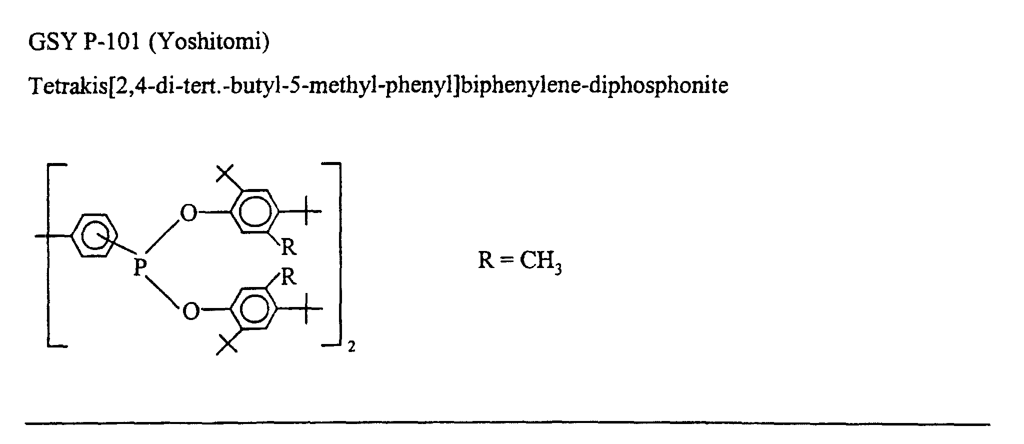

Irgafos®P-EPQ (Ciba-Geigy)
Sandostab®P-EPQ (Clariant)
Composed of
   1) 50-80 parts of Tetrakis(2,4-di-tert.-butylphenyl)-biphenylene-diphosphonite 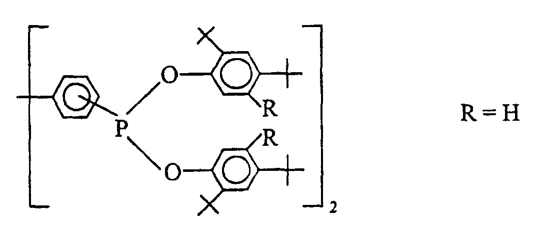
   2) 10-25 parts of bis(2,4-di-tert.-butylphenyl)biphenylene-monophosphonite
   3) 10-25 parts of tris(2,4-di-tert.-butylphenyl)phosphite

For avoidance of doubt, in this specification tert.-butyl means tertiary-butyl, -C(CH₃)₃.

The following non-limiting examples illustrate the invention in its various aspects. All parts and percentages are expressed by weight.

### EXAMPLES

The following types of unstabilized polyethylene are used in the examples described hereinunder:

| **PE No.** | **Type of Polyethylene** |
|---|---|
| PE-1 | HDPE, prepared with Cr-catalyst, blow molding grade |
| | MFI = 0.25 g / 10 min (190°C / 2.16 kg) |
| | MFI = 18.96 g / 10 min (190°C / 21.6 kg) |
| PE-2 | HDPE, prepared with Ti-catalyst |
| | MFI = 2.4 g / 10 min (190°C / 10 kg) |
| PE-3 | LLDPE, MFI = 1.4 g / 10 min (190°C / 2.16 kg) |

The various additives tested are used as received from the respective suppliers. ATP means α-tocopherol.

| **Code** | **Composition component** | **Tradename / Manufacturer** |
|---|---|---|
| AO-1 | component (a) | Irganox 1010/Ciba-Geigy |
| AO-2 | component (a) | Irganox 1076/Ciba-Geigy |
| PS-1 | component (b) | Sandostab P-EPQ/Clariant |
| ATP | component (c) | Ronotec 201/Hoffmann-La Roche |

The tested samples are prepared as follows. In each case 100 parts of the different types of polyethylenes are dry-blended with the tested additives as well as with a lubricant, followed by pre-extrusion in a single screw laboratory extruder with 80 rpm at temperatures as given below in table 2.

After extrusion compounding the materials are sequentially passed in total five times through a single screw extruder (compression ratio = 1:3, L/D = 20) at temperatures and numbers of revolutions per minute as given below in table 2. The unstabilized resins are in most cases also processed through the extruder so that all materials have the same heat history. After the five extrusion passes the materials are assessed in respect of color quality and change of molecular weight.

The color quality is reported in terms of the Yellowness Index (YI), determined on the granules in accordance with the ASTM 1925-70 Yellowness Test. The higher the value, the lower the color quality, i.e. the worse the discoloration.

The change of the molecular weight is reported in terms of the melt flow index (MFI) according to ASTM D-1238-70, measured in a Zwick melt flow indexer at temperatures and loads as given below. Experiment errors of the MFI measurements are determined from an independent series of measurements, and are found to be ± 0.01 for the MFI measured at 190°C and 2.16 kg load, and ± 0.3 for the MFI measured at 190°C and 21.6 kg load.

| Comparison data refers to the following prior art documents (D): | |
|---|---|
| **Code** | **Document** |
| D-1 | Gächter, Müller, Plastics Additives, 3rd edition, Hanser Publishers 1990 |
| D-2 | Journal of Plastic Film & Sheeting, volume 11, 1995, pages 126-142 |
| D-3 | US P 4,806,580 |
| D-4 | EP-A-0 542 108 |

**TABLE 2**

| Additional conditions of the sample preparations. | | | | | |
|---|---|---|---|---|---|
| **Example No.** | **Type of PE** | **Lubricant** | **Compounding temperature** | **Extrusion** | |
| | | | | **temp.** | **rpm** |
| 1 | PE-1 | 500 ppm Zn Stearate | 200°C | 220°C | 70 |
| 2 | PE-1 | 500 ppm Zn Stearate | 200°C | 240°C | 70 |
| 3 | PE-2 | 1000 ppm Ca Stearate | 210°C | 270°C | 100 |
| 4 | PE-3 | 1000 ppm Ca Stearate | 210°C | 240°C | 70 |

### EXAMPLE 1

Comparison data (CD) CD-1 presents the stabilization system according to the currently used formulation.
CD-2 presents the system described in D-2.
CD-3 corresponds to the disclosures given in D-3 and D-4.
I- 1 is an example according to the present invention.

As is evident from the results given in table 3, the stabilizer composition according to the invention offers significantly better melt stabilization than systems according to the prior art, providing simultaneously an excellent color retention. The unstabilized polymer (PE-1) illustrates the effect of pronounced crosslinking after 5 repeated extrusions; the MFI drops to the undesirable value of 9.96 g / 10 min.

**TABLE 3**

| Data of example 1. | | | | | | |
|---|---|---|---|---|---|---|
| **Experiment** | **AO-1** | **PS-1** | **ATP** | **MFI** | | **YI** |
| | **[ppm]** | **[ppm]** | **[ppm]** | **[190°C/2.16 kg]** | **[190°C/2.16 kg]** | |
| PE-1 | --- | --- | --- | 0.05 g / 10 min | 9.96 g / 10 min | 1.23 |
| CD-1 | 500 | 500 | --- | 0.16 g / 10 min | 15.79 g / 10 min | -0.6 |
| CD-2 | 500 | --- | 100 | 0.15 g / 10 min | 15.79 g / 10 min | 0.57 |
| CD-3 | --- | 500 | 100 | 0.11 g / 10 min | 13.06 g / 10 min | 0.95 |
| I-1 | 500 | 500 | 100 | 0.2 g / 10 min | 17.43 g / 10 min | -0.55 |

### EXAMPLE 2

Comparison data CD-1 to CD-4 describe common formulations of polyethylene.
CD-5 and CD-6 correspond to the additive systems described in D-2.
CD-7 and CD-8 correspond to the systems disclosed in D-3.
I-1 to I-4 are stabilizer compositions according to the invention.

As can be seen from the results summarized in table 4, the unstabilized polymer is significantly crosslinked after the 5 extrusions. Further, the stabilizer compositions according to the invention significantly outperform the systems known in the art with regard to the melt flow retention and color stabilization. The comparison of the results of CD-3 with those of I-1 on the one hand and of the results of CD-4 with those of I-2 on the other hand clearly demonstrate that the obtained stabilization effect is not caused by an increase of the total concentration of phenolic antioxidant (AO-1 and ATP). It is believed that the stabilization performance of the stabilizer compositions according to the invention, i.e. I-1 and I-2 in the aforementioned comparison, is achieved by a synergistic action of all three components of the stabilizer composition and, thus, cannot be regarded as pure additive, i.e. quantity depending effects. Since the effectiveness of the single components AO-1, PS-1 and ATP is well known in the prior art, it is surprising to find this particular synergy by triple-combinations according to the present invention.

**TABLE 4**

| Data of example 2. | | | | | | |
|---|---|---|---|---|---|---|
| **Experiment** | **AO-1** | **PS-1** | **ATP** | **MFI** | | **YI** |
| | **[ppm]** | **[ppm]** | **[ppm]** | **[190°C/2.16 kg]** | **[190°C/2.16 kg]** | |
| PE-1 | --- | --- | --- | 0.01 g / 10 min | 9.10 g / 10 min | --- |
| CD-1 | 500 | 750 | --- | 0.17 g / 10 min | 16.76 g / 10 min | -1.00 |
| CD-2 | 500 | 1000 | --- | 0.20 g / 10 min | 18,03 g / 10 min | -1.10 |
| CD-3 | 750 | 750 | --- | 0.17 g / 10 min | 17.01 g / 10 min | -0.11 |
| CD-4 | 750 | 1000 | --- | 0.20 g / 10 min | 18.21 g / 10 min | -0.24 |
| CD-5 | 500 | --- | 100 | 0.14 g / 10 min | 15.70 g / 10 min | -0.39 |
| CD-6 | 750 | --- | 100 | 0.15 g / 10 min | 16.33 g / 10 min | -1.14 |
| CD-7 | --- | 750 | 100 | 0.14 g / 10 min | 14.49 g / 10 min | 0.59 |
| CD-8 | --- | 1000 | 100 | 0.16 g / 10 min | 15.46 g / 10 min | 0.42 |
| I-1 | 500 | 750 | 100 | 0.21 g / 10 min | 18.16 g / 10 min | -0.90 |
| I-2 | 500 | 1000 | 100 | 0.23 g / 10 min | 18.98 g / 10 min | -1.10 |
| I-3 | 750 | 750 | 100 | 0.22 g / 10 min | 18.55 g / 10 min | -1.61 |
| I-4 | 750 | 1000 | 100 | 0.24 g / 10 min | 19.10 g / 10 min | -1.67 |

### EXAMPLE 3

CD-1 and CD-2 are comparison tests. I-1 is according to the invention. The results are summarized in table 5.

Again, the stabilizer composition according to the invention gives the best melt and color stabilization. The comparison of the results of CD-2 or CD-3 with those of I-1 repeatedly appears to confirm that the stabilization effect is achieved by a synergistic effect of all three components of the stabilizer composition according to the invention.

**TABLE 5**

| Data of example 3. | | | | | |
|---|---|---|---|---|---|
| **Experiment** | **AO-1 [ppm]** | **PS-1 [ppm]** | **ATP [ppm]** | **MFI [190°C/10 kg]** | **YI** |
| PE-2 | --- | --- | --- | 4.83 g / 10 min | --- |
| CD-1 | 1000 | --- | --- | 3.97 g / 10 min | 2.8 |
| CD-2 | 500 | 1000 | --- | 2.86 g / 10 min | 2.7 |
| I-1 | 400 | 1000 | 100 | 2.55 g / 10 min | 1.4 |

### EXAMPLE 4

CD-1 and CD-2 are comparison tests. I-1 is according to the invention. The results are summarized in table 6.

As can be seen from table 6 the stabilizer composition according to the invention conferred unexpectedly outstanding melt flow retention and color stabilization to the tested polymer. This stabilization effect is achieved at a significantly lower total stabilizer concentration than it was used in CD-2.

**TABLE 6**

| Data of example 4. | | | | | |
|---|---|---|---|---|---|
| **Experiment** | **AO-2 [ppm]** | **PS-1 [ppm]** | **ATP [ppm]** | **MFI [190°C/2.16 kg]** | **YI** |
| CD-1 | 700 | --- | --- | 0.82 g / 10 min | 3.0 |
| CD-2 | 700 | 1000 | --- | 1.25 g / 10 min | 0.2 |
| I-1 | 250 | 1000 | 100 | 1.30 g / 10 min | -0.8 |

## Claims

1. A stabilizer composition for the stabilization of polyethylene-based thermoplastic polymers comprising
a) at least one sterically hindered phenol,
b) at least one phosphorus-containing secondary antioxidant, and
c) at least one tocopherol compound
wherein the weight ratio of component (a) to component (b) is from 2:1 to 1:4 and the weight ratio of component (a) to component (c) is from 2:1 to 10:1.

2. A composition according to claim 1 wherein the weight ratio of component (a) to component (b) is 1:1 and the weight ratio of component (a) to component (c) is 5:1.

3. A composition according to claim 1 or 2 wherein the tocopherol compound is α-tocopherol (5,7,8-Trimethyl-tocol).

4. A composition according to any preceding claim wherein the sterically hindered phenol is 2,2'-Bis[3,5-[3,5-bis(1,1-dimethylethyl)-4-hydroxyphenyl]-1-oxoprop-oxy]methyl-1,3-propanediyl-3,5-bis(1,1-dimethylethyl)-4-hydroxybenzenepro-panoate; Octadecyl-3,5-bis(1,1-dimethylethyl)-4-hydroxybenzenepropanoate; 1,3,5-tris[[3,5-bis(1,1-dimethylethyl)-4-hydroxyphenyl]methyl]1,3,5,-triazine-2,4,6(1H,3H,5H)trione; 4,4',4"-[2,4,6-trimethyl-1,3,5-benzenetriyl)tris-(methylene)]tris[2,6-bis(1,1-dimethylethyl)-phenol; Ethanediyl-3,5-bis(1,1-dimethylethyl)-4-hydroxy-thiodi-2,1-benzenepropanoate; 2:1 calcium salt of monoethyl-[[3,5-bis(1,1-dimethylethyl)-4-hydroxyphenyl]-methyl]-phosphonic acid ester; 2-[3-[3,5-bis(1,1-dimethylethyl)-4-hydroxy-phenyl]-1-oxopropyl]-hydrazide-3,5-bis(1,1-dimethylethyl)-4-hydroxy-benzene-propanoic acid; 2,2'-oxamido-bis-[ethyl-3-(3,5-di-tert.-butyl-4-hydroxyphenyl)-propionate] or mixtures thereof.

5. A composition according to any preceding claim wherein the phosphorus-containing secondary antioxidant is Triphenylphosphite, Tris-isodecylphosphite; Tris(nonylphenyl)phosphite; Distearyl pentaerythritol diphosphite; 2,4,6-tri-tert.-butylphenyl-2-butyl-2-ethyl-1,3-propanediol phosphite; Bis(2,4-di-tert.-butylphenyl)-pentaerythrityl diphosphite; 2,2',2"-nitrilo triethyl-tris[3,3',5,5'-tetra-tert.-butyl-1,1'-biphenyl-2,2'-diyl]phosphite; Bis[2,4-di-tert.-butyl-6-methyl-phenyl]ethyl phosphite; 2,2'-Ethylidene-bis-(4,6-di-tert.-butylphenyl)fluorophosphite; Tris(2,4-di-tert.-butylphenyl)phosphite; the 4,6-di-tert.-butyl-m-cresol condensation products with the Friedel-Crafts-reaction products of biphenyl and phosphorus trichloride; Tetrakis [2,4-ditert.-butylphenyl]-4,4'-biphenylenediphosphonite;the condensation products of 2,4-di-tert.-butylphenol with the Friedel-Crafts-reaction product of biphenyl and PCl₃.

6. A method for enhancing the processing stability of polyethylene-based thermoplastic polymers comprising incorporating therein before or during processing a stabilizing quantity of the stabilizer composition according to claim 1.

7. A method according to claim 6 wherein the stabilizer composition is added in an amount of from 0.001 to 5% by weight, preferably from 0.01 to 1% by weight, more preferably from 0.1 to 0.5% by weight, based on the thermoplastic polymer.

8. A process for producing a stabilizer composition according to claim 1 comprising mixing the components (a), (b) and (c) in the weight ratios given in claim 1 or 2.

9. A masterbatch composition comprising a stabilizer composition according to claim 1 and a thermoplastic material which is identical or compatible with the polyethylene-based thermoplastic polymer to be stabilized.

10. A masterbatch composition according to claim 9 comprising 10 to 80% by weight, preferably 5 to 25% by weight of the stabilizer composition and 90 to 20% by weight, preferably 95 to 75% by weight of said thermoplastic material.

11. A stabilized polyethylene-based thermoplastic polymer and any article manufactured therefrom being stabilized by the incorporation therein of a stabilizing quantity of the stabilizing composition according to claim 1.

## Patentansprüche

1. Eine Stabilisatorzusammensetzung für die Stabilisierung von thermoplastischen Polymeren auf Polyethylen Basis, enthaltend
a) mindestens ein sterisch gehindertes Phenol,
b) mindestens ein Phosphor enthaltendes sekundäres Antioxidans, und
c) mindestens eine Tocopherol Verbindung
worin das Gewichtsverhältnis der Komponente (a) zur Komponente (b) von 2:1 bis 1:4 und das Gewichtsverhältnis der Komponente (a) zur Komponente (c) von 2:1 bis 10:1 beträgt.

2. Eine Zusammensetzung gemäss Patentanspruch 1, worin das Gewichtsverhältnis der Komponente (a) zur Komponente (b) 1:1 und das Gewichtsverhältnis der Komponente (a) zur Komponente (c) 5:1 beträgt.

3. Eine Zusammensetzung gemäss Patentanspruch 1 oder 2, worin die Tocopherol Verbindung a-Tocopherol (5,7,8-Trimethyl-tocol) ist.

4. Eine Zusammensetzung gemäss einem der vorhergehenden Patentansprüche, worin das sterisch gehinderte Phenol 2,2'-Bis[3,5-[3,5-bis(1,1-dimethylethyl)-4-hydroxy-phenyl]-1-oxoprop-oxy]methyl-1,3-propandiyl-3,5-bis(1,1-dimethylethyl)-4-hydroxy-benzolropanoat; Octadecyl-3,5-bis(1,1-dimethylethyl)-4-hydroxybenzol-propanoat; 1,3,5-Tris[[3,5-bis(1,1-dimethylethyl)-4-hydroxyphenyl]methyl]1,3,5-triazin-2,4,6(1 H,3H,5H)trion; 4,4'4"-[2,4,6-Trimethyl-1,3,5-benzoltriyl)tris-(methylen)-tris[26-bis(1,1-dimethylethyl)-phenol; Ethandiyl-3,5-bis(1,1-dimethylethyl)-4-hydroxy-thiodi-2,1-benzolpropanoat; 2:1 Calciumsalz des Monoethyl-[[3,5-bis(1,1-dimethylethyl)-4-hydroxyphenyl]methyl]-phosphonsäure-esters; 2-[3-[3,5-Bis(1,1-dimethylethyl)-4-hydroxyphenyl]-1-oxopropyl]-hydrazid-3,5-bis(1,1-dimethylethyl)-4-hydroxy-benzol-propionsäure; 2,2'-Oxamido-bis-[ethyl-3-(3,5-di-tert.-butyl-4-hydroxyphenyl)-propionat] oder deren Mischungen ist.

5. Eine Zusammensetzung gemäss einem der vorhergehenden Patentansprüche, worin das phosphorhaltige sekundäre Antioxidans Triphenylphosphit, Tris-isodecylphosphit; Tris(nonylphenyl)phosphit, Distearyl pentaerythritol diphosphit; 2,4,6-Tri-tert.-butyl-henyl-2-butyl-2-ethyl-1,3-propandiol phosphit; Bis(2,4-di-tert.-butylphenyl)-penta-rythrityl diphosphit; 2,2',2"-Nitril triethyl-tris[3,3',5,5'-tetra-tert.-butyl-1,1'-biphenyl-2,2'-diyl]phosphit; Bis[2,4-Di-tert.-butyl-6-methyl-phenyl]ethyl phosphit; 2,2'-Ethyliden-bis-(4,6-di-tert. Butylphenyi)fluorphosphit; Tris(2,4-di-tert.-butyl-phenyl)phosphit; das 4,6-Di-tert.-butyl-m-cresol Kondensationsprodukt mit den Friedel-Crafts-Reaktions-rodukten von Biphenyl und Phosphortrichlorid; tetrakis[2,4-di-tert.-butylphenyl]-4,4'-biphenylen-iphosphonit; das Kondensationsprodukt von 2,4-Di-tert-butylphenol mit dem Friedel-Crafts Reaktionsprodukt von Biphenyl und PCl₃ ist.

6. Ein Verfahren zur Verbesserung der Verarbeitungsstabilität von thermoplastischen Polymeren auf Polyethylen Basis beinhaltend die Einarbeitung vor oder während der Verarbeitung einer stabilisierenden Menge einer Stabilisator Zusammensetzung gemäss Patentanspruch 1.

7. Ein Verfahren gemäss Patentanspruch 6, worin die Stabilisatorzusammensetzung in einer Menge von 0,001 bis 5 Gew.%, vorzugsweise von 0,01 bis 1 Gew.%, stärker bevorzugt von 0,1 bis 0,5 Gew.%, bezogen auf das thermoplastische Polymer, zugesetzt wird.

8. Ein Verfahren zur Herstellung einer Stabilisatorzusammensetzung gemäss Patentanpruch 1 beinhaltend das Vermischen der Komponenten (a), (b) und (c) in den im Patentanspruch 1 oder 2 angegebenen Gewichtsverhältnissen.

9. Eine Masterbatchzusammensetzung, beinhaltend eine Stabilisatorzusammensetzung gemäss Patentanspruch 1 und ein thermoplastisches Material, welches identisch oder verträglich ist mit dem zu stabilisierenden thermoplastischen Polymer auf Polyethylen Basis.

10. Eine Masterbatchzusammensetzung gemäss Patentanspruch 9, beinhaltend 10 bis 80 Gew.%, vorzugsweise 5 bis 25 Gew.% der Stabilisatorzusammensetzung und 90 bis 20 Gew.%, vorzugsweise 95 bis 75 Gew.% des besprochenen thermoplastischen Materials.

11. Ein stabilisiertes thermoplastisches Polymer auf Polyethylen Basis und jeder daraus hergestellte Artikel, welcher durch Einarbeitung einer stabilisierenden Menge der Stabilisatorzusammensetzung gemäss Patentanspruch 1 stabilisiert ist.

## Revendications

1. Une composition de stabilisant pour la stabilisation de polymères thermoplastiques à base de polyéthylène, comprenant
a) au moins un phénol stériquement encombré,
b) au moins un anti-oxydant secondaire contenant du phosphore, et
c) au moins un composé du tocophérol,
dans laquelle le rapport pondéral du composant (a) au composant (b) est de 2:1 à 1:4 et le rapport pondéral du composant (a) au composant (c) est de 2:1 à 10:1.

2. Une composition selon la revendication 1, dans laquelle le rapport pondéral du composant (a) au composant (b) est de 1:1 et le rapport pondéral du composant (a) au composant (c) est de 5:1.

3. Une composition selon la revendication 1 ou 2, dans laquelle le composé du tocophérol est l'α-tocophérol (5,7,8-triméthyl-tocol).

4. Une composition selon l'une quelconque des revendications précédentes, dans laquelle le phénol stériquement encombré est le 2,2'-bis[3,5-bis(1,1-diméthyléthyl)-4-hydroxyphényl]-1-oxopropoxy]méthyl-1,3-propanediyl-3,5-bis(1,1-diméthyléthyl)-4-hydroxybenzènepropanoate; l'octadécyl-3,5-bis(1,1-diméthyléthyl)-4-hydroxybenzène-propanoate; la 1,3,5-tris{[3,5-bis(1,1-diméthyléthyl)-4-hydroxyphényl]méthyl}-1,3,5-triazine-2,4,6-(1H,3H,5H)trione; le 4,4',4"-[2,4,6-triméthyl-1,3,5-benzènetriyl)-tris-(méthylène)]-tris-[2,6-bis(1,1-diméthyléthyl)-phénol; l'éthanediyl-3,5-bis(1,1-diméthyl-éthyl)-4-hydroxy-thiodi-2,1-benzènepropanoate; le sel de calcium 2:1 de l'ester monoéthylique de l'acide {[3,5-bis(1,1-diméthyléthyl)-4-hydroxyphényl]-méthyl}-phosphonique; l'acide 2-{3-[3,5-bis(1,1-diméthyléthyl)-4-hydroxy-phényl]-1-oxopropyl}-hydrazide-3,5-bis(1,1-diméthyléthyl)-4-hydroxy-benzène-propanoïque; le 2,2'-oxamido-bis-[éthyl-3-(3,5-di-tert.-butyl-4-hydroxyphényl)-propionate] ou leurs mélanges.

5. Une composition selon l'une quelconque des revendications précédentes, dans laquelle l'anti-oxydant secondaire contenant du phosphore est le triphénylphosphite, le tris-isodécylphosphite, le tris(nonylphényl)phosphite, le distéaryl-pentaérythritol diphosphite, le 2,4,6-tri-tert.-butylphényl-2-butyl-2-éthyl-1,3-propanediol phosphite, le bis(2,4-di-tert.-butylphényl)-pentaérythrityl diphosphite, le 2,2',2"-nitrilo triéthyl-tris[3,3',5,5'-tétra-tert.-butyl-1,1'-biphényl-2,2'-diyl]phosphite, le bis[2,4-di-tert.-butyl-6-méthyl-phényl]éthyl phosphite, le 2,2'-éthylldène-bis-(4,6-di-tert.-butylphényl)luoro-hosphite, le tris(2,4-di-tert.-butylphényl)phosphite, les produits de condensation du 4,6-di-tert.-butyl-m-crésol avec les produits de réaction de Friedel-Crafts du biphényle et du trichlorure de phosphore, le tétrakis[2,4-di-tert.-butylphényl]-4,4'-biphénylènedihosphonite, les produits de condensation du 2,4-di-tert-butylphénol avec le produit de réaction de Friedel-Crafts du biphényle et de PCl₃.

6. Une méthode pour augmenter la stabilité à la transformation de polymères thermoplastiques à base de polyéthylène, comprenant l'incorporation dans ceux-ci, avant ou durant la transformation, d'une quantité stabilisante de la composition de stabilisant selon la revendication 1.

7. Une méthode selon la revendication 6, dans laquelle la composition de stabilisant est ajoutée en une quantité de 0,001 à 5% en poids, de préférence de 0,01 à 1% en poids, plus préférablement de 0,1 à 0,5% en poids, par rapport au polymère thermoplastique.

8. Un procédé de production d'une composition de stabilisant selon la revendication 1, comprenant le mélange des composants (a), (b) et (c) dans les rapports pondérales donnés à la revendication 1 ou 2.

9. Une composition de mélange maître comprenant une composition de stabilisant selon la revendication 1 et une matière thermoplastique qui est identique ou compatible avec le polymère thermoplastique à base de polyéthylène à stabiliser.

10. Une composition de mélange maître selon la revendication 9, comprenant de 10 à 80% en poids, de préférence de 5 à 25% en poids de la composition de stabilisant et de 90 à 20% en poids, de préférence de 95 à 75% en poids de ladite matière thermolastique.

11. Un polymère thermoplastique stabilisé à base de polyéthylène et tout article fabriqué à partir de ce polymère, qui a été stabilisé par incorporation dans ce polymère d'une quantité stabilisante de la composition de stabilisant selon la revendication 1.
